# EUROPEAN PATENT SPECIFICATION

(11) **EP 3 944 924 B1**
(45) Date of publication and mention of the grant of the patent: **17.07.2024**
(21) Application number: 21188949.8
(22) Date of filing: 30.07.2021
(51) Int. Cl.: B23Q 3/06

(54) **SCREW CLAMPING DEVICE**
SCHRAUBKLEMMVORRICHTUNG
DISPOSITIF DE SERRAGE DE VIS

(30) Priority: 31.07.2020 IT 202000018781
(43) Date of publication of application: 02.02.2022
(73) Proprietor: HITACHI RAIL STS S.P.A., 80147 Napoli (IT)
(72) Inventor: SCOGNAMIGLIO, Raffaele, 80147 Napoli (IT)
(74) Representative: Studio Torta S.p.A.

(56) References cited:
- CN-A- 103 753 287
- CN-A- 105 108 525
- CN-U- 202 804 743

## Description

### TECHNICAL FIELD

The invention concerns a screw clamping device for clamping and holding workpieces, in particular welding elements.

### STATE OF THE PRIOR ART

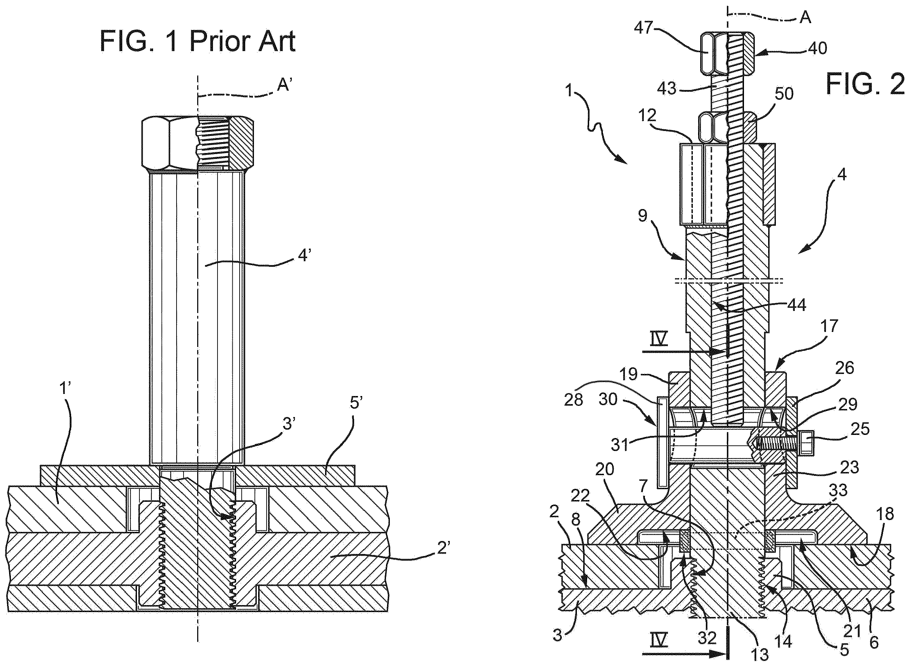

During a welding operation, one of the elements to be welded can be held in the welding position by known clamping devices, such as, for example, shown in Figure 1.

Figure 1 represents a traditional clamping of a welding element 1'.

The element 1' is supported by a stop member 2', which is provided with a threaded hole 3' along a vertical axis A'. At the same time, a screw 4' screwed to the threaded hole 3' carries a plate 5' welded in a fixed position coaxial to the screw 4', so that the element 1' is clamped between the plate 5' and the member 2', according to the axis A'.

Traditional clamping has the disadvantage of being difficult to release at the end of welding due to the tensions that develop caused by the normal thermal expansion occurring during welding.

In particular, the screw is normally chosen with a thick pitch so that a certain clearance is left between the screw itself and the welding element; the latter deforms during welding by exploiting the clearance so as to be slightly offset with respect to the screw. This causes a jamming between the screw and the welding element.

Moreover, the aforementioned tensions generally produce a significant increase in friction between the plate and the welding element.

For these reasons, the manual extraction of the welded element requires an excessive effort of the operator, who is often forced to use known tools that have the disadvantage of having a potential negative impact on the safety of said operator or even causing plastic deformations of the components that clamp the welding element.

### OBJECT OF THE INVENTION

Based on the above, an object of the invention is to limit and possibly eliminate at least one of the aforementioned disadvantages.

Solutions according to the preamble of claim 1 are described in CN103753287A, CN202804743U, CN105108525A.

A further purpose of the invention is to improve known solutions.

According to the invention, at least one of the aforementioned objects is achieved by means of a screw clamping device, as defined in claim 1.

The dependent claims define specific embodiments of the invention.

### BRIEF DESCRIPTION OF THE DRAWINGS

In the following, particular embodiments will be described by way of non-limiting example for a better understanding of the invention and with reference to the attached drawings, wherein:
- Figure 1 is a side view, with parts removed for clarity, of a clamping assembly according to the prior art;
- Figure 2 is a side view, with parts removed for clarity, of a clamping assembly which comprises a screw clamping device according to an embodiment of the invention;
- Figure 3 is similar to Figure 2 and shows the screw clamping device in a different operating configuration;
- Figure 4 is a section according to the imaginary plane IV-IV represented in Figure 2;

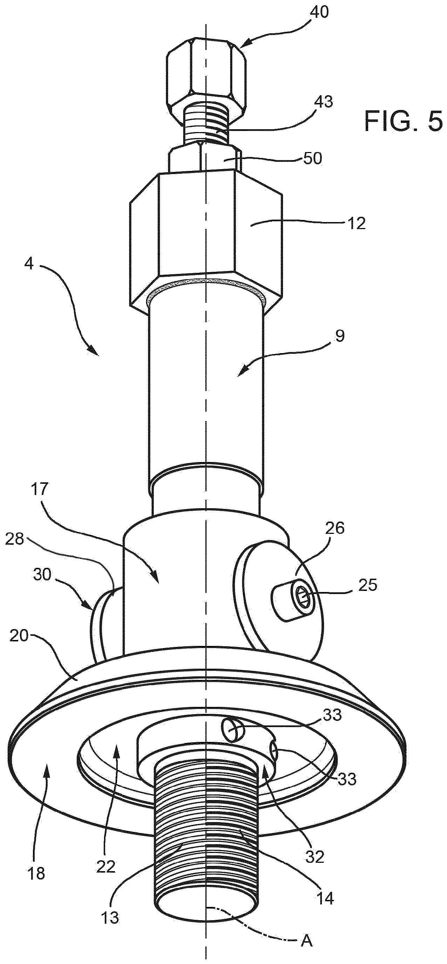

- Figure 5 is a perspective view, on an enlarged scale, of the screw clamping device of Figure 2; and
- Figure 6 is an exploded view of the screw clamping device of Figure 5;

### PREFERRED EMBODIMENT OF THE INVENTION

In Figure 2, reference number 1 denotes a clamping assembly for clamping and holding a workpiece 2 in a fixed machining position.

The clamping assembly 1 comprises a stop member 3 adapted to support the workpiece 2 in the machining position and a screw clamping device 4 for clamping the workpiece 2 against the stop member 3.

In greater detail, the stop member 3 comprises a coupling portion 5 adapted to be coupled with the device 4 and a stop portion 6 adapted to receive and support the workpiece 2.

Specifically, the coupling portion 5 has a threaded hole 7 along an axis A, in particular vertical.

The stop portion 6 extends radially with respect to the axis A in the outermost position of the coupling portion 5 and defines for the workpiece 2 a support surface 8 transverse to the axis A, more precisely orthogonal to the latter.

Again, with reference to Figure 2, the device 4 comprises a rod 9 which extends along the axis A between two ends 12, 13 and comprises a threaded portion 14, which is fixed by screwing to the coupling portion 5, i.e., to the stop member 3, and is specifically defined by an external thread, more precisely at the end 13.

The device 4 comprises, furthermore, a clamping member 17 arranged around the rod 9 and having a clamping surface 18 transversal to the axis A, in particular orthogonal to the latter, in order to come into contact with the workpiece 2 during the screwing of the threaded portion 14 to the stop member 3.

The clamping surface 18 faces the workpiece 2, i.e., towards the threaded portion 14.

As shown in Figure 2, the clamping surface 18 is in contact with the workpiece 2 and the entire device 4 is fixed with respect to the stop member 3. In this way, the workpiece 2 is clamped between the clamping surface 18 and the stop member 3.

According to the invention, the clamping member 17 is coupled to the rod 9 in an axially movable manner, more precisely in a sliding manner, with respect to the rod 9.

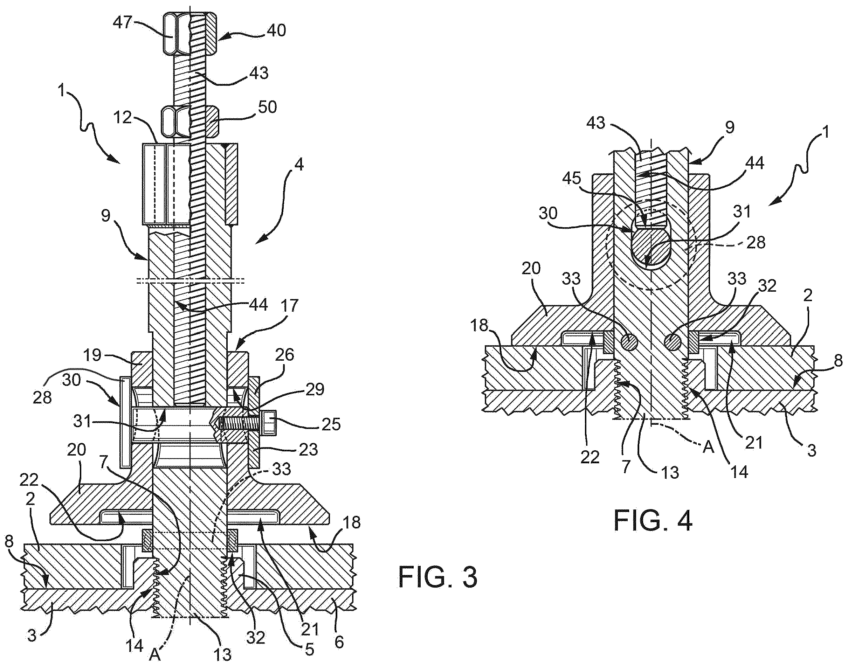

Also when the rod 9 is fixed to the stop member 3, the clamping member 17 can slide along the axis A between a clamping position (Figure 2), in which the workpiece 2 is clamped between the surfaces 8, 18, and a plurality of release positions (e.g., Figure 3), in which the clamping member 17 is spaced from the workpiece 2.

The clamping member 17 comprises a tubular element 19, which is coaxial to the rod 9 and coupled to the latter in a sliding manner along the axis A.

In turn, the tubular element 19 comprises an end that is closest to the threaded portion 14 and is defined by a portion 20 having a disc or plate shape. The portion 20 ends axially towards the threaded portion 14 with the clamping surface 18, which is specifically a ring-like surface arranged around the axis A.

Therefore, the portion 20 has an axial recess 21 axially delimited by an annular surface 22 arranged around the axis A and parallel to the clamping surface 18.

The tubular element 19 comprises, furthermore, an end 23 opposite with respect to the portion 20. The end 23 is specifically a cylindrical shape, in particular with a reduced radial extension with respect to the portion 20.

In addition to the tubular element 19, the clamping member 17 comprises, furthermore, an insertion element 30 fixed with respect to the tubular element 19 and inserted transversely through the rod 9, in particular in a through manner.

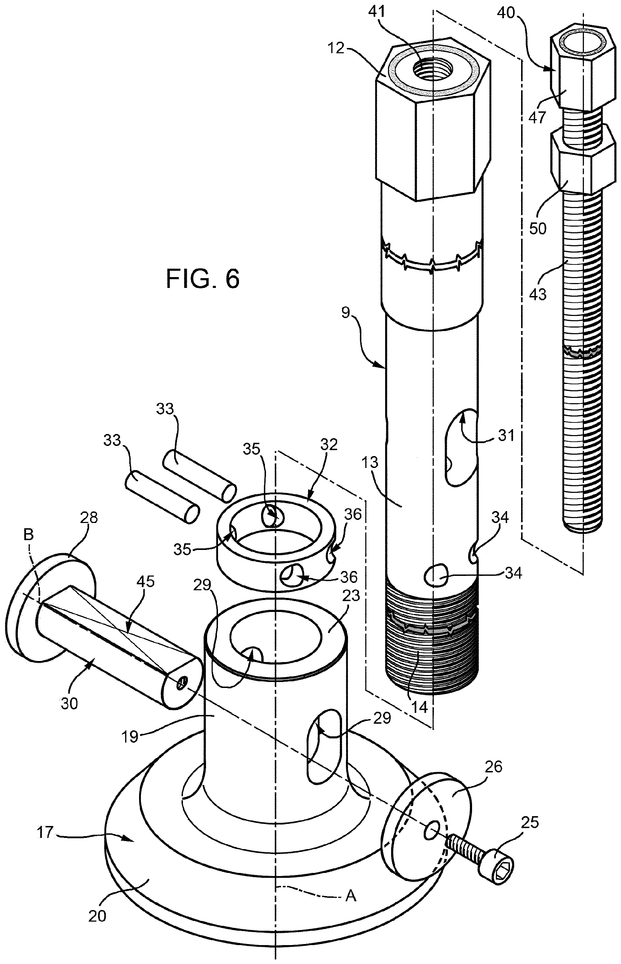

Specifically, as shown in Figure 6, the insertion element 30 comprises a pin, which extends along an axis B transverse to the axis A (more precisely orthogonal) and comprises, in particular, a head 28, for example cylindrical. The pin passes through a pair of through slots 29 formed on the tubular element 19, more precisely on the end 23, in aligned positions along the axis B.

The clamping member 17 comprises fixing elements for fixing the insertion element 30 to the tubular element 19. In particular, the fixing elements comprise a screw 25 to be screwed onto the pin, more particularly on the side opposite the head 28, and a washer 26 for tightening the screw on the tubular element 19. In practice, when the screw 25 is screwed onto the pin, the tubular element 19 is clamped between the head 28 and the washer 26. The pin passes through both slots 29, while the screw 25 passes through a single slot 29, i.e., the one provided on the side opposite the head 28. To allow the insertion of the insertion element 30, the rod 9 comprises a hole 31 with an axis parallel to the axis B. In particular, the hole 31 is a through-hole passing through the rod 9.

The diameter of the hole 31 is such as to allow the housing of the insertion element 30 with clearance. More precisely, the insertion element 30 extends along the hole 31 and is movable along the axis A inside the hole 31.

In fact, the surfaces that define the hole 31 constitute a physical limit for the axial movement of the clamping member 17. For example, in the release position illustrated in Figure 3, the insertion element 30 is in contact with the upper surface of the hole 31. Said release position is calculated in the design phase for corresponding to the position in which the tension on the clamping member 17 is substantially zero.

Moreover, in the direction approaching the threaded portion 14, the axial movement of the clamping member 17 is furthermore preferably limited with respect to the limit imposed by the hole 31; for this purpose, the device 4 comprises a shoulder element 32, which is arranged between the clamping member 17 and the threaded portion 14, is carried in a fixed position by the rod 9 and defines an end of stroke for the axial movement of the clamping member 17 towards the threaded portion 14.

The shoulder element 32 could have a function independent from the hole 31 and from the insertion element 30, therefore it could be provided in the device 4 regardless of the presence of the same.

As can be shown in Figure 2, the shoulder element 32 is in contact with the clamping member 17, so that it prevents the latter from moving towards the threaded portion 14, in particular without the insertion element 30 entering into contact with the lower surface of the hole 31. In fact, the insertion element 30 is spaced from the surfaces that define the hole 31. This avoids friction and overloads on the insertion element 31.

The shoulder element 32 comprises in particular a stop ring, specifically arranged coaxially to the rod 9 in the outermost radial position and more particularly fixed to the rod 9 by means of pins 33.

The stop ring comes into contact with the surface 22 of the axial recess 21.

With reference to Figures 4 and 6, the rod 9 and the stop ring have, for each pin 33, at least two respective holes 34, 35 which match one another to allow the insertion of the corresponding pin 33. Clearly, the holes 35 are through-holes in order to allow the insertion of the pins 33 into the holes 34.

More precisely, the holes 34 are also through-holes and for each hole 35, the stop ring comprises a further through-hole 36 coaxial to the corresponding hole 35 and engaged by the pin 33. Therefore, the holes 34 are completely crossed through by the pins 33.

To allow sliding or thrusting of the clamping member 17 towards the threaded portion 14, the device 4 comprises a threaded thrust member 40 which can be screwed to a further threaded portion 41 (Figure 6) of the rod 9. The threaded portion 41 is arranged so that the clamping member 17 is placed or slides axially between the same threaded portion 41 and the other threaded portion 14. More precisely, the threaded portion 41 is arranged at the end 12.

The thrust member 40 is adapted to push the clamping member 17 during screwing to the threaded portion 41. In other words, the arrangement of the clamping member 17 is such that it can come into contact with the thrust member 40 while screwing the latter to the threaded portion 41.

In greater detail, the thrust member 41 comprises a threaded rod 43, possibly provided with a head 47 so as to form a screw.

The rod 43 is screwed along a hole 44, which is obtained on the rod 9, extends along the axis A starting from the end 12 and comprises a portion defined by the threaded portion 41.

The hole 44 extends along the axis A from the end 12 until communicating with the hole 31. Specifically, the thrust of the member 41 is received by a portion inside the hole 31 of the insertion element 30, i.e., of the respective pin. In particular, in the embodiment illustrated in Figure 6, the pin has a flattening, i.e., a flat surface 45 adapted for receiving, in abutment, one end of the rod 43.

In fact, the rod 43 has an extension along the axis A which is longer than that of the hole 44. In this way, the screwing of the rod 43 involves the entry of the respective end into the hole 31. Here, the same end comes into contact with the surface 45, which is pushed towards the threaded portion 14 while the rod 43 continues to be screwed onto the threaded portion 41.

Advantageously, the device 4 comprises a lock nut 50 adapted to be screwed onto the threaded rod 43 and clamped against the end 12 of the rod 9, so that the rods 9 and 43 are even more firmly fixed to one another, although in a releasable manner. In particular, the lock nut 50 is used for fixing the respective position between the rods 9, 43 when the screwing of the rod 43 leads the clamping element 18 to the clamping position of Figure 2.

Preferably, the threaded portion 14 is of the trapezoidal type in order to effectively counteract the tensions exerted on the clamping member 17 by the workpiece 2 during processing, specifically welding. More preferably, the pitch of the threaded portion 14 is a thick pitch, for example between 4 and 8 mm, in particular 6 mm. The threaded portion 14 allows a clearance adapted to compensate for the expansions of the workpiece 2 during machining.

Conveniently, the threaded portion 41 is a metric thread with a thin pitch, for example between 1 and 2 mm, in particular 1.5 mm. The thin pitch allows for simple release.

The operation of the device 4 is as follows.

To weld the workpiece 2, the latter is placed resting on the stop member 3 at the supporting surface 7. The clamping member 17 is coupled to the rod 9 by means of the fixing elements which fix the insertion element 30 to the tubular element 19 after introducing the same insertion element 30 into the hole 31 through the holes 29 of the tubular body. By gravity, the clamping element 18 rests on the shoulder element 32.

At this point, the rod 9 is screwed through the threaded portion 14 on the hole 7 until the clamping surface 18 comes into contact with the workpiece 2.

Therefore, the threaded rod 43 is screwed to the threaded portion 44 with the lock nut 50 coupled to the threaded rod 43 between the head 47 and the end 12. The screwing continues until pushing the insertion element 30 and clamping the clamping member 17 against the workpiece 2.

The clamping position thus obtained is therefore definitively locked by screwing the lock nut 50 on the threaded rod 43 until clamping the same against the end 12 (Figure 2).

In the clamping position, an operator, not shown, can perform the welding of the workpiece 2 held in the machining position by the clamping member 17 and by the stop member 3.

During welding, the thermal expansions of the workpiece 2 and/or of the components of the device 4 cause reactions of the workpiece 2 on the clamping surface 18. Said reactions are directed along the axis A towards the threaded portion 41.

At the end of the welding, the lock nut 50 is loosened by the operator. In this way, the reactions of the workpiece 2 favour the unscrewing of the thrust member 40 and the axial movement of the clamping member 17 towards the threaded portion 41 (Figure 4).

In the release position, namely when the clamping member 17 is spaced from the workpiece 2, the operator can unscrew the rod 9 from the hole 7. This last unscrewing operation is facilitated since the workpiece 2 does not generate friction on the clamping member 17 coupled to the rod 9.

From the above, the advantages of the device 4 are evident.

In particular, due to the fact that the clamping member 17 is axially movable with respect to the rod 9, the operator can release said clamping member 17 before proceeding with the extraction of the rod 9.

The latter extraction is particularly facilitated and safe compared to the prior art; in fact, the clamping member 17 is free from friction with the workpiece 2, as it is spaced from the same in the release position.

Furthermore, the release of the clamping member 17 is facilitated as it is favoured by the reaction forces of the workpiece 2, which exert a thrust on the clamping member 17 towards the release position.

During the machining of the workpiece 2, the thrust member 40 receives reaction thrusts from the insertion element 30 which are directed along the axis A. Furthermore, the thin pitch of the threaded portion 41 limits the clearances and the insertion element 30 remains perfectly perpendicular to the axis A. In other words, the flat surface 45 always remains perpendicular to the axis A. Thus, the jamming typical of the state of the art does not occur on the thrust member 40, which is therefore easily removable, also specifically due to the thin pitch of the threaded portion 41.

In addition, the thrust member 40 is an inexpensive and easily manufactured threaded member, as well as manoeuvrable, for example by means of a special key. Furthermore, the constructive aspects of the device 4, such as for example the details of the clamping member 17 ensure a satisfactory resistance to deformation and longevity of use. These latter aspects have been verified by the Applicant by means of computer simulations.

Finally, it is clear that modifications and variations can be made to the device 4 described and illustrated that do not go beyond the scope defined by the claims.

## Claims

1. A screw clamping device (4) comprising:
- a first rod (9) extending along an axis (A) and comprising a first threaded portion (14) to be screwed, in use, into a stop member (3) adapted to support a workpiece (2) to be clamped; and
- a clamping member (17) coupled with the first rod (9) and arranged around the first rod (9);
the clamping member (17) having a clamping surface (18) transverse to the first rod (9) and facing the first threaded portion (14) in order to come into contact with the workpiece (2) during the screwing of the first threaded portion (14) into the stop member (3), such that the workpiece (2) is clamped between the stop member (3) and the clamping surface (18) ;
**wherein the** first rod (9) comprises a second threaded portion (41), whereby the clamping member (17) is coupled to the first rod (9) in an axially sliding manner between the first and second threaded portions (14, 41),
**the device comprising** a threaded thrust member (40) that can be screwed into the second threaded portion (41) to axially push the clamping member (17) towards the first threaded portion (14);
**characterized in that the first rod (9) comprises a first hole (31) which extends transversely to said axis (A);**
**the clamping member (17) comprising an insertion element (30) arranged inside the first hole (31) in a mobile manner along said axis (A).**

2. The screw clamping device according to claim 1, further comprising a lock nut (50) which can be screwed into the thrust member (40) for fixing the thrust member (40) and the first rod to one another in a releasable manner.

3. The screw clamping device according to claim **1 or 2,** wherein the first rod (9) comprises a second hole (44) which extends along said axis (A) from one end of the first rod (9) until communicating with the first hole (31) and is at least partially defined by the second threaded portion (41);
the thrust member (40) comprising a second rod (43), which is at least partially threaded externally and is adapted to be screwed onto the second threaded portion (41) into the second hole (44) to push the insertion element (30) towards the first threaded portion (14).

4. The screw clamping device according to claim **3,** wherein the second rod (43) has an extension along said axis (A) longer than that of the second hole (44), such that the second rod (43) pushes the insertion element (30) while screwing onto the second threaded portion (41).

5. The screw clamping device according to claim **3 or 4,** wherein the insertion element (30) has a flat surface (45) facing the second hole (44), such that the flat surface (45) is adapted to receive the thrust of_the second rod (43).

6. The screw clamping device according to any one of the **preceding** claims, wherein the clamping member (17) also comprises:
- a tubular element (19) coaxial to the first rod (9) and having a pair of through-holes (29) communicating with respective ends of the first hole (31), which defines a further through-hole; and
- fixing means (25, 26) for fixing the insertion element (30) to the tubular element (19);
wherein the insertion element (30) extends along the first hole (31) and through one of said through-holes (29);
the fixing means (25, 26) comprising a fixing element (25) which can be coupled to the insertion element (30) by passing through the other of said through-holes (29).

7. The screw clamping device according to any one of the **preceding** claims, further comprising a shoulder element (32) carried in a fixed position by the first rod (9) axially between the first threaded portion (14) and the clamping member (17),
the shoulder element (32) defining an end stop for the axial movement of the clamping member (17) towards the first threaded portion (14).

8. The screw clamping device according to claim **7,** wherein the insertion element (30) is spaced from the surfaces that define the first hole (31) when the thrust member (40) is in contact with the shoulder element (32).

9. A screw clamping assembly (1) comprising the clamping device (4) according to any one of the preceding claims and the stop member (3) adapted to support the workpiece (2).

## Patentansprüche

1. Schraubklemmvorrichtung (4) aufweisend:
- eine erste Stange (9), welche sich entlang einer ersten Achse (A) erstreckt und einen ersten Gewindeabschnitt (14) aufweist, welcher dazu ausgebildet ist, in Gebrauch in ein Anschlagsbauteil (3), welches dazu ausgebildet ist, ein zu klemmendes Werkstück (2) abzustützen, geschraubt zu werden; und
- ein Klemmbauteil (17), welches mit der ersten Stange (9) gekoppelt und die erste Stange (9) umgebend angeordnet ist;
wobei das Klemmbauteil (17) eine Klemmoberfläche (18) aufweist, welche transversal zu der ersten Stange und zu dem ersten Gewindeabschnitt (14) hin ausgerichtet ist, um während des Schraubens des ersten Gewindeabschnitts (14) in das Anschlagsbauteil (3) das Werkstück (2) derart zu kontaktieren, dass das Werkstück (2) zwischen das Anschlagsbauteil (3) und die Klemmoberfläche (18) geklemmt wird; wobei die erste Stange (9) einen zweiten Gewindeabschnitt (41) aufweist, wobei das Klemmbauteil (17) zwischen dem ersten und dem zweiten Gewindeabschnitt (14, 41) in einer axial verschiebbaren Art mit der ersten Stange (9) gekoppelt ist, wobei die Vorrichtung ein Gewindeschubbauteil (40) aufweist, welches derart in den zweiten Gewindeabschnitt (41) geschraubt werden kann, dass das Klemmbauteil (17) axial in Richtung des ersten Gewindeabschnitts (14) geschoben wird;
**gekennzeichnet dadurch, dass** die erste Stange (9) eine erste Ausnehmung (31) aufweist, welche sich transversal zu der Achse (A) erstreckt;
das Klemmbauteil (17) ein Einschubelement (30) aufweist, welches in einer entlang der Achse (A) beweglichen Art innerhalb der ersten Ausnehmung (31) angeordnet ist.

2. Schraubklemmvorrichtung gemäß Anspruch 1, weiterhin aufweisend eine Schlossmutter (50), welche dazu ausgebildet ist, derart in das Schubbauteil (40) geschraubt zu werden, dass das Schubbauteil (40) und die erste Stange in einer lösbaren Art aneinander befestigt werden.

3. Schraubklemmvorrichtung gemäß einem der Ansprüche 1 oder 2, wobei die erste Stange (9) eine zweite Ausnehmung (44) aufweist, welche sich entlang der Achse (A) von einem Ende der ersten Stange (9) bis zu der ersten Ausnehmung (31) erstreckt und welche zumindest teilweise durch den zweiten Gewindeabschnitt (41) bestimmt wird;
das Schubbauteil (40) eine zweite Stange (43) aufweist, welche zumindest teilweise ein Außengewinde aufweist und dazu ausgebildet ist, derart über den zweiten Gewindeabschnitt (41) in die zweite Ausnehmung (44) geschraubt zu werden, dass das Einschubelement (30) in Richtung des ersten Gewindeabschnitts (14) geschoben wird.

4. Schraubklemmvorrichtung gemäß Anspruch 3, wobei die zweite Stange (43) entlang der Achse (A) eine Verlängerung aufweist, welche derart länger als die zweite Ausnehmung (44) ausgebildet ist, dass die zweite Stange (43) während des Schraubens in den zweiten Gewindeabschnitt (41) das Einschubelement (30) schiebt.

5. Schraubklemmvorrichtung gemäß einem der Ansprüche 3 oder 4, wobei das Einschubelement (30) eine flache Oberfläche (45) aufweist, welche derart zu der zweiten Ausnehmung (44) hin ausgerichtet ist, dass die flache Oberfläche (45) dazu ausgebildet ist, den Schub der zweiten Stange (43) aufzunehmen.

6. Schraubklemmvorrichtung gemäß einem der vorhergehenden Ansprüche, wobei das Klemmbauteil (17) weiterhin aufweist:
- ein zu der ersten Stange (9) koaxiales Rohrelement (19), welches ein Paar von Durchtrittsöffnungen (29) aufweist, welche mit den entsprechenden Enden der ersten Ausnehmung (31) derart in Verbindung stehen, dass eine weitere Durchtrittsöffnung gebildet wird; und
- Befestigungsmittel (25, 26), welche dazu ausgebildet sind, das Einschubelement (30) an dem Rohrelement (19) zu befestigen;
wobei sich das Einschubelement (30) entlang der ersten Ausnehmung (31) und durch eine der Durchtrittsöffnungen (29) hindurch erstreckt;
die Befestigungsmittel (25, 26) ein Befestigungselement (25) aufweisen, welches dazu ausgebildet ist, mit dem Einschubelement (30) durch Passieren der anderen Durchtrittsöffnung (29) gekoppelt zu werden.

7. Schraubklemmvorrichtung gemäß einem der vorhergehenden Ansprüche, weiterhin aufweisend ein Schulterelement (32), welches in einer axial festen Position zwischen dem ersten Gewindeabschnitt (14) und dem Klemmbauteil (17) von der ersten Stange (9) getragen wird,
wobei das Schulterelement (32) einen Endanschlag für die axiale Bewegung des Klemmbauteils (17) in Richtung des ersten Gewindeabschnitts (14) bestimmt.

8. Schraubklemmvorrichtung gemäß Anspruch 7, wobei das Einschubelement (30) von den Oberflächen, welche die erste Ausnehmung (31) definieren, beabstandet angeordnet ist, wenn das Schubbauteil (40) das Schulterelement (32) kontaktiert.

9. Schraubklemmanordnung (1) aufweisend die Klemmvorrichtung (4) gemäß einem der vorhergehenden Ansprüche und das Anschlagsbauteil (3), welches dazu ausgebildet ist, das Werkstück (2) abzustützen.

## Revendications

1. Dispositif de serrage à vis (4) comprenant :
- une première tige (9) s'étendant le long d'un axe (A) et comprenant une première partie filetée (14) à visser, à l'usage, dans un élément de butée (3) adapté pour supporter une pièce à usiner (2) à serrer ; et
- un élément de serrage (17) couplé avec la première tige (9) et agencé autour de la première tige (9) ;
l'élément de serrage (17) ayant une surface de serrage (18) transversale par rapport à la première tige (9) et faisant face à la première partie filetée (14) afin de venir en contact avec la pièce à usiner (2) pendant le vissage de la première partie filetée (14) dans l'élément de butée (3), de sorte que la pièce à usiner (2) est serrée entre l'élément de butée (3) et la surface de serrage (18) ;
dans lequel la première tige (9) comprend une deuxième partie filetée (41), moyennant quoi l'élément de serrage (17) est couplé à la première tige (9) d'une manière axialement coulissante entre les première et deuxième parties filetées (14, 41),
le dispositif comprenant un élément de poussée fileté (40) qui peut être vissé dans la deuxième partie filetée (41) afin de pousser, axialement, l'élément de serrage (17) vers la première partie filetée (14) ;
**caractérisé en ce que** la première tige (9) comprend un premier trou (31) qui s'étend transversalement par rapport audit axe (A) ;
l'élément de serrage (17) comprenant un élément d'insertion (30) agencé à l'intérieur du premier trou (31) d'une manière mobile le long dudit axe (A).

2. Dispositif de serrage à vis selon la revendication 1, comprenant en outre un contre-écrou (50) qui peut être vissé dans l'élément de poussée (40) pour fixer l'élément de poussée (40) et la première tige l'un à l'autre d'une manière amovible.

3. Dispositif de serrage à vis selon la revendication 1 ou 2, dans lequel la première tige (9) comprend un deuxième trou (44) qui s'étend le long dudit axe (A) à partir d'une extrémité de la première tige (9) jusqu'à communiquer avec le premier trou (31) et est au moins partiellement défini par la deuxième partie filetée (41) ;
l'élément de poussée (40) comprenant une deuxième tige (43), qui est au moins partiellement filetée à l'extérieur et est adaptée pour être vissée sur la deuxième partie filetée (41) dans le deuxième trou (44) afin de pousser l'élément d'insertion (30) vers la première partie filetée (14).

4. Dispositif de serrage à vis selon la revendication 3, dans lequel la deuxième tige (43) a une extension le long dudit axe (A) plus longue que celle du deuxième trou (44), de sorte que la deuxième tige (43) pousse l'élément d'insertion (30) lors du vissage sur la deuxième partie filetée (41).

5. Dispositif de serrage à vis selon la revendication 3 ou 4, dans lequel l'élément d'insertion (30) a une surface plate (45) faisant face au deuxième trou (44), de sorte que la surface plate (45) est adaptée pour recevoir la poussée de la deuxième tige (43).

6. Dispositif de serrage à vis selon l'une quelconque des revendications précédentes, dans lequel l'élément de serrage (17) comprend également :
- un élément tubulaire (19) coaxial par rapport à la première tige (9) et ayant une paire de trous débouchants (29) communiquant avec des extrémités respectives du premier trou (31), qui définit un autre trou débouchant ; et
- des moyens de fixation (25, 26) pour fixer l'élément d'insertion (30) à l'élément tubulaire (19) ;
dans lequel l'élément d'insertion (30) s'étend le long du premier trou (31) et à travers l'un desdits trous débouchants (29) ;
les moyens de fixation (25, 26) comprenant un élément de fixation (25) qui peut être couplé à l'élément d'insertion (30) en passant à travers l'autre desdits trous débouchants (29).

7. Dispositif de serrage à vis selon l'une quelconque des revendications précédentes, comprenant en outre un élément d'épaulement (32) porté, dans une position fixe, par la première tige (9) axialement entre la première partie filetée (14) et l'élément de serrage (17),
l'élément d'épaulement (32) définissant une butée d'extrémité pour le mouvement axial de l'élément de serrage (17) vers la première partie filetée (14).

8. Dispositif de serrage à vis selon la revendication 7, dans lequel l'élément d'insertion (30) est espacé des surfaces qui définissent le premier trou (31) lorsque l'élément de poussée (40) est en contact avec l'élément d'épaulement (32).

9. Ensemble de serrage à vis (1) comprenant le dispositif de serrage (4) selon l'une quelconque des revendications précédentes et l'élément de butée (3) adapté pour supporter la pièce à usiner (2).
